# FASCICULE DE BREVET EUROPEEN

(11) **EP 3 303 885 B1**
(45) Date de publication et mention de la délivrance du brevet: **22.05.2024**
(21) Numéro de dépôt: 16705237.2
(22) Date de dépôt: 26.01.2016
(51) Int. Cl.: F16J 9/08, F04B 39/00, F04B 53/14, F16J 15/40, F16J 15/46, F16J 15/56

(54) **DISPOSITIF D'ÉTANCHÉITÉ À COUSSIN DE FLUIDE**
DICHTUNGSVORRICHTUNG MIT FLUIDKISSEN
SEALING DEVICE WITH FLUID CUSHION

(30) Priorité: 30.01.2015 FR 1550763
(43) Date de publication de la demande: 11.04.2018
(73) Titulaire: Rabhi, Vianney, 69006 Lyon (FR)
(72) Inventeur: Rabhi, Vianney, 69006 Lyon (FR)
(74) Mandataire: Vuillermoz, Bruno
(86) Numéro de dépôt international: PCT/FR2016/050152
(87) Numéro de publication internationale: WO 2016/120556

(56) Documents cités:
- WO-A-86/03817
- JP-A- H04 266 666
- US-A- 4 199 152

## Description

La présente invention est relative à un dispositif d'étanchéité à coussin de fluide.

De nombreuses technologies existent qui permettent de réaliser une étanchéité entre un piston et un cylindre de sorte à empêcher un gaz mis sous pression de fuir entre ledit piston et ledit cylindre.

Peu de pistons fonctionnent sans segment, bague ou dispositif d'étanchéité car l'absence de tels organes conduit à des débits de fuite importants.

Une alternative consiste toutefois en laisser un jeu faible entre le piston et le cylindre avec lequel il coopère sans que ledit piston ne puisse jamais toucher ledit cylindre. Toutefois, s'il s'agit d'étancher un gaz, ledit jeu ne doit pas excéder quelques microns, ce qui devient en pratique irréalisable par la seule précision de réalisation des composants mécaniques qui guident ledit piston dans ledit cylindre.

Laisser un jeu faible entre le piston et le cylindre est une approche souvent retenue notamment pour les pompes hydrauliques qui pompent un liquide aux propriétés lubrifiantes. En ce dernier cas, le piston peut être guidé à faible jeu par le cylindre car un film lubrifiant est toujours naturellement intercalé entre ledit piston et ledit cylindre.

En outre, vu la viscosité élevée des lubrifiants liquides par rapport à celle des gaz, un jeu de quelques dizaines de microns est acceptable même sous des pressions de quelques centaines de bars, ledit jeu conduisant à des débits de fuite relative acceptables.

Certaines inventions proposent donc d'utiliser des liquides dans des compresseurs pour réaliser une étanchéité entre les pièces à étancher de sorte à faire barrage au passage d'un gaz. Cette stratégie se retrouve par exemple dans certains compresseurs à vis industriels, avec en plus l'avantage de refroidir les gaz comprimés qui cèdent une partie de leur chaleur au lubrifiant de sorte que le compresseur délivre un meilleur rendement, proche de l'isotherme.

Lorsqu'il s'agit de compresseurs alternatifs à piston, on parle alors plutôt de coussin de fluide formant une étanchéité hydrodynamique ou hydrostatique.

C'est le cas par exemple de l'invention objet du brevet n° WO 86/03817 déposé par BERTIN & CIE le 3 juillet 1986, laquelle invention propose d'utiliser un liquide injecté sous pression entre les surfaces du piston et du cylindre pour empêcher un gaz de passer entre ledit piston et ledit cylindre.

Sur le principe, cet arrangement doit permettre de conférer au piston d'un compresseur à gaz les avantages en étanchéité d'un piston de pompe hydraulique. Toutefois, un tel principe ne peut s'appliquer que s'il est acceptable de mélanger une grande quantité de liquide suffisamment visqueux et lubrifiant avec le gaz à comprimer.

D'ailleurs, comme précisé en début de revendication n°1 du brevet n° WO 86/03817, l'invention s'applique aux compresseurs opérant à basse température car sinon, le fluide utilisé passerait de l'état liquide à l'état vapeur et le cas échéant - s'il s'agit d'un combustible - pourra même brûler et/ou cokéfier.

Si le liquide n'est pas un lubrifiant mais de l'eau comme suggéré dans le brevet, on peut s'interroger sur la durabilité du dispositif dans la mesure où rien n'interdit les segments tels que présentés d'entrer en contact avec la pièce antagoniste avec laquelle ils coopèrent tandis que les qualités lubrifiantes de l'eau sont extrêmement limitées.

On constate notamment que le brevet n° WO 86/03817 prévoit un segment maintenu plaqué sur le piston ou le cylindre par la pression du liquide servant à l'étanchéité. A cet effet, le diamètre du segment doit pouvoir être augmenté ou diminué par la pression. Ledit brevet ne proposant pas d'autre alternative, ce résultat est obtenu en prévoyant pour ledit segment une coupe, cette dernière constituant, comme le sait l'homme de l'art, un point de passage des gaz de nature à diminuer significativement l'efficacité totale de l'étanchéité recherchée.

Une approche similaire consiste en produire une étanchéité au niveau d'axes tournants de pompes hydrauliques centrifuges comme le propose par exemple le brevet n° US 4 199 152 A du 22 avril 1980 relatif à l'invention de Fritz C. Catterfeld. Dans ce cas, un liquide est également utilisé, mais qui cette fois s'intercale entre un arbre et un stator pour produire un film hydrodynamique porteur. On est là encore dans le contexte d'un liquide et non d'un gaz servant à étancher entre elles les pièces mobiles.

Une approche similaire est présentée par le brevet JP H 04266666 A du 22 septembre 1992 déposé par Mitsubishi Heavy Industry. Il s'agit cette fois bien d'un gaz injecté par une bague solidaire du stator à l'interface entre ladite bague et un arbre tournant, ledit gaz injecté permettant de faire barrage à un autre gaz.

Dans ce cas, l'interstice laissé entre la bague et l'arbre est réglé par la précision de réalisation et la bague se trouve centrée par la portance aérodynamique créée à l'interface entre ladite bague et ledit arbre à la fois par la pression du gaz injecté à ladite interface, et par la rotation dudit arbre.

On notera d'ailleurs que le jeu laissé entre la bague et l'arbre est fixé par construction. Dans cette mesure, le jet de gaz au jeu entre la bague et l'arbre n'a d'autre fonction que de maintenir ladite bague à distance de l'arbre sans contact. Il s'agit donc plus d'un dispositif de centrage aérodynamique que d'un dispositif d'étanchéité en ce que la consommation de gaz pour maintenir centrée la bague est supérieure à celle qu'engendrerait une fuite du gaz à étancher passant par le même jeu.

On notera d'ailleurs pour cette dernière invention que si le diamètre de l'arbre augmentait sous l'effet de la température, rien n'empêcherait le serrage de la bague autour de l'arbre de même qui si le diamètre de l'arbre diminuait, le jeu et les fuites associées augmenteraient dramatiquement entre la bague et l'arbre. Ces dernières inventions sont donc peu adaptées aux conditions usuelles de fonctionnement des pistons des compresseurs ou des moteurs. Ainsi, dans la majorité des cas, il est donc nécessaire de prévoir un dispositif d'étanchéité pour lesdits pistons.

On distingue les dispositifs d'étanchéité pour piston fonctionnant sans huile qui sont dits « secs », de ceux prévus pour fonctionner lubrifiés par de l'huile interposée entre le ou les segment(s) ou le ou les bague(s) qui constituent lesdits dispositifs, et le cylindre avec lequel ils coopèrent.

La conception d'un dispositif d'étanchéité pour piston résulte d'un compromis entre le niveau d'étanchéité que procure ledit dispositif, la perte énergétique par frottement qu'il occasionne, et sa durée de vie.

On distingue principalement deux domaines d'utilisation des dispositifs d'étanchéité pour piston alternatif : les compresseurs, et les moteurs.

Les compresseurs à air sec sont courants car de nombreuses applications ne tolèrent aucun lubrifiant dans l'air comprimé auquel elles ont recours. Les pistons qui équipent les compresseurs à air sec sont majoritairement munis de bagues d'étanchéité en « Teflon » qui est la marque déposée par la société américaine « Dupont de Nemours » du Polytétrafluoroéthylène, aussi appelé « PTFE ». Ce polymère est thermostable, il possède une grande inertie chimique et a un grand pouvoir antiadhésif. Le PTFE a toutefois l'inconvénient d'un coefficient de frottement nettement plus élevé que celui d'un segment à coupe dont la lubrification s'établit en régime hydrodynamique sur la majeure partie de son parcours. Pour lui conférer une résistance à l'abrasion acceptable et une durée de vie acceptable, on peut charger le PTFE de grains durs et de grains antifriction solides comme par exemple de la céramique ou du coke. Malgré ces améliorations, les segments à coupe lubrifiés en fonte ou en acier présentent généralement une meilleure durabilité que les dispositifs en PTFE.

Dans le domaine des moteurs thermiques à combustion interne alternatifs, les bagues en PTFE chargé sont rarement utilisées car il est possible de lubrifier le cylindre desdits moteurs avec de l'huile sans nuire au fonctionnement de ces derniers. De ce fait, on préfère opter pour des segments à coupe lubrifiés en fonte qui génèrent moins de pertes d'énergie par frottement, et qui présentent une meilleure durabilité que les bagues en PTFE.

Selon l'application, il faut donc faire un choix entre une bague d'étanchéité opérant à sec mais qui génère des pertes par frottement élevées et qui est moins durable, et un segment à coupe métallique lubrifié avec de l'huile qui dissipe moins d'énergie par frottement, et dont la durée de vie est plus longue. Dans la pratique et dans la majorité des cas, seule la nécessité de conserver un air sec et exempt d'huile justifie le choix d'une bague d'étanchéité opérant à sec.

On note également qu'en dehors de la nécessité de préserver l'air ou le gaz comprimé de toute présence de lubrifiant, certaines applications à hautes températures ne sont pas compatibles avec la lubrification elle-même. En effet, au-delà d'une certaine température, l'huile se cokéfie et perd ses caractéristiques lubrifiantes au contact de la paroi interne du compresseur et notamment de son cylindre et/ou de ses segments. La température limite de cokéfaction des huiles minérales classiques se situe entre cent soixante et deux cent degrés Celsius. Les huiles synthétiques les plus performantes sur ce critère trouvent leur température limite de cokéfaction à environ trois cent degrés Celsius, dans le meilleur cas.

Si la température atteinte en fonctionnement est encore plus élevée - par exemple de l'ordre de quatre cent cinquante à cinq cent degrés Celsius - il y a un risque d'auto-inflammation de l'huile contenue dans l'air à l'instar de ce qui survient dans les moteurs Diesel.

Pourtant, il serait intéressant de pouvoir réaliser des moteurs thermiques dotés d'un cylindre de détente, d'une culasse et d'une calotte de piston qui opèrent à des températures encore plus élevées, de l'ordre de mille degrés Celsius voire plus. En ce cas, un moteur à cycle de Brayton à régénération ordinairement mis en oeuvre au moyen de compresseurs et de turbines centrifuges pourrait être réalisé en recourant à des machines volumétriques à piston. Le rendement d'un tel moteur peut être significativement plus élevé que celui des moteurs thermiques à combustion interne alternatifs conventionnels à allumage commandé à cycle d'Otto ou de Beau de Rochas, ou à allumage par compression à cycle de Diesel.

Toutefois, dans un tel contexte, la lubrification d'un segment de piston de moteur à combustion interne conventionnel est impossible car aucune huile ne peut résister aux températures de l'ordre de mille degrés Celsius voire plus évoquées sans brûler ou se cokéfier immédiatement. On ne peut donc pas prévoir de segment à coupe en fonte ou en acier car ledit segment demande à être lubrifié pour fonctionner. De même, il est impossible de prévoir un segment PTFE ou similaire dont le point de fusion est trouvé à une température de l'ordre de seulement trois cent trente degrés Celsius.

Outre les températures de fonctionnement élevées, il serait également intéressant de pouvoir concevoir, produire et commercialiser des compresseurs à piston non lubrifié produisant de l'air sec et dont la perte énergétique par frottement au niveau de leur dispositif d'étanchéité de piston est limitée, contrairement à ce que permet une bague en PTFE conventionnelle.

C'est pour repousser les limites des dispositifs d'étanchéité notamment pour pistons de compresseurs et moteurs alternatifs que le dispositif d'étanchéité à coussin de fluide selon l'invention permet un fonctionnement :
- particulièrement étanche ;
- qui ne nécessite aucune lubrification ;
- qui génère des pertes par frottement minimales ;
- compatible avec un piston et/ou un cylindre porté à très haute température, de l'ordre de mille degrés Celsius et plus ;
- qui ne touche pas le cylindre et qui est à ce titre robuste et durable.

On note que le champ d'application du dispositif d'étanchéité à coussin de fluide selon l'invention peut s'étendre à toute autre machine linéaire et/ou alternative et notamment, à tout vérin à gaz, amplificateur de pression ou accumulateur de pression ces exemples étant donnés à titre non-limitatif, et de manière générale, à tout appareil dont ledit dispositif peut améliorer la performance énergétique et/ou l'efficacité, ou dont ledit dispositif peut étendre le domaine d'application.

Dans la plupart des applications, le dispositif d'étanchéité à coussin de fluide selon l'invention est destiné à étancher un gaz. Toutefois, ledit dispositif peut dans certaines applications être utilisé pour étancher un liquide et devenir ainsi un dispositif d'étanchéité à coussin de liquide opérant de la même manière et produisant les mêmes résultats. Etancher un liquide au moyen d'un dispositif d'étanchéité à coussin de liquide selon l'invention peut trouver un réel intérêt par exemple pour certaines pompes à piston utilisées notamment dans l'industrie.

Les autres caractéristiques de la présente invention ont été décrites dans la description et dans les revendications secondaires dépendantes directement ou indirectement de la revendication principale.

Le dispositif d'étanchéité à coussin de fluide suivant la présente invention est prévu pour un piston pouvant se déplacer en translation longitudinale dans un cylindre et dans le même axe que ce dernier, ledit piston et ledit cylindre définissant, avec au moins une culasse, une chambre à étancher, ledit dispositif d'étanchéité comprenant :
- Au moins un anneau continu perforé qui comporte une face cylindrique interne d'anneau, une face cylindrique externe d'anneau et deux faces axiales d'anneau ledit anneau étant logé dans au moins une gorge d'anneau aménagée dans le piston ou dans le cylindre, tandis que ledit anneau peut se mouvoir radialement dans la gorge d'anneau sans pouvoir sortir de cette dernière, ledit anneau étant suffisamment souple pour permettre à son diamètre d'augmenter ou de diminuer par rapport à celui de ladite gorge sous l'effet d'une pression d'une source de fluide sous pression;
- Des moyens d'étanchéité d'anneau qui réalisent une étanchéité entre chaque face axiale d'anneau et la gorge d'anneau, de sorte que cette dernière définit avec l'anneau continu perforé une chambre de répartition de pression raccordée par un circuit de transfert de pression à une source de fluide sous pression ;
- Au moins un orifice calibré qui traverse de part en part l'anneau continu perforé dans son épaisseur radiale ;
- Au moins une surface de portance sur coussin de fluide que comporte l'anneau continu perforé, ladite surface de portance étant disposée à l'opposé de la chambre de répartition de pression.

Le dispositif d'étanchéité à coussin de fluide suivant la présente invention comprend un évidement de contrepression axialement non-débouchant qui est aménagé en creux sur la face cylindrique externe d'anneau dans le cas où la gorge d'anneau est aménagée dans le piston, de manière que la surface non-occupée par l'évidement de contrepression de la face cylindrique externe d'anneau qui reçoit ledit évidement constitue la surface de portance sur coussin de fluide.

Le dispositif d'étanchéité à coussin de fluide suivant la présente invention comprend un évidement de contrepression axialement non-débouchant qui est aménagé en creux sur la face cylindrique interne d'anneau dans le cas où la gorge d'anneau est aménagée dans le cylindre, de manière que la surface non-occupée par l'évidement de contrepression de la face cylindrique interne d'anneau qui reçoit ledit évidement constitue la surface de portance sur coussin de fluide.

Le dispositif d'étanchéité à coussin de fluide suivant la présente invention comprend un évidement de contrepression qui est constitué d'une gorge de contrepression de faible profondeur plus ou moins centrée sur la longueur axiale de la face cylindrique externe d'anneau ou de la face cylindrique interne d'anneau qui reçoit ledit évidement, ladite gorge de contrepression étant réalisée sur toute la circonférence de ladite face cylindrique externe d'anneau ou de ladite face cylindrique interne d'anneau.

Le dispositif d'étanchéité à coussin de fluide suivant la présente invention comprend un orifice calibré qui débouche dans l'évidement de contrepression.

Le dispositif d'étanchéité à coussin de fluide suivant la présente invention comprend un orifice calibré qui débouche dans l'évidement de contrepression par l'intermédiaire d'un évidement de distribution de pression aménagé en creux au fond dudit évidement de contrepression.

Le dispositif d'étanchéité à coussin de fluide suivant la présente invention comprend un évidement de distribution de pression qui est constitué d'une gorge de distribution de pression plus ou moins centrée sur la longueur axiale de la face cylindrique externe d'anneau ou de la face cylindrique interne d'anneau qui reçoit l'évidement de contrepression, ladite gorge de distribution de pression étant réalisée sur toute la circonférence de ladite face cylindrique externe d'anneau ou de ladite face cylindrique interne d'anneau.

Le dispositif d'étanchéité à coussin de fluide suivant la présente invention comprend au moins l'un des deux bords axiaux de la face cylindrique externe d'anneau ou de la face cylindrique interne d'anneau sur laquelle est aménagé l'évidement de contrepression, qui se termine par une dépouille de placage de bord.

Le dispositif d'étanchéité à coussin de fluide suivant la présente invention comprend des moyens d'étanchéité d'anneau qui sont constitués d'une lèvre d'étanchéité d'anneau qui est solidaire de l'anneau continu perforé d'une part, et qui établit un contact étanche avec l'intérieur ou le rebord de la gorge d'anneau d'autre part.

Le dispositif d'étanchéité à coussin de fluide suivant la présente invention comprend des moyens d'étanchéité d'anneau qui sont constitués d'une portion axiale désépaissie aménagée au voisinage de l'une au moins des extrémités axiales de l'anneau continu perforé, ladite portion étant solidaire de la gorge d'anneau de façon étanche, et étant suffisamment souple pour permettre au diamètre de l'anneau continu perforé d'augmenter ou de diminuer par rapport à celui de ladite gorge.

Le dispositif d'étanchéité à coussin de fluide suivant la présente invention comprend un anneau continu perforé qui est constitué d'un matériau souple et qui comprend au moins un ressort circonférentiel d'anneau qui tend à réduire le diamètre dudit anneau si la gorge d'anneau est aménagée dans le piston ou qui tend à augmenter le diamètre dudit anneau si la gorge d'anneau est aménagée dans le cylindre.

Le dispositif d'étanchéité à coussin de fluide suivant la présente invention comprend une chambre de répartition de pression qui héberge des moyens de diffusion de fluide d'anneau qui forcent le fluide d'anneau en provenance du circuit de transfert de pression à lécher la plus grande surface possible de la face cylindrique interne d'anneau dans le cas où la gorge d'anneau est aménagée dans le piston ou la plus la grande surface possible de la face cylindrique externe d'anneau dans le cas où la gorge d'anneau est aménagée dans le cylindre, avant de s'échapper via l'orifice calibré.

Le dispositif d'étanchéité à coussin de fluide suivant la présente invention comprend des moyens de diffusion de fluide d'anneau qui sont constitués d'une plaque de diffusion logée au fond de la gorge d'anneau, l'une au moins des extrémités axiales de ladite plaque étant munie d'au moins un orifice ou gorge latérale de plaque de diffusion qui force le fluide d'anneau provenant du circuit de transfert de pression à déboucher dans la chambre de répartition de pression par l'une au moins de ses extrémités axiales.

Le dispositif d'étanchéité à coussin de fluide suivant la présente invention comprend une gorge d'anneau qui présente une butée radiale d'anneau qui limite la pénétration de l'anneau continu perforé dans ladite gorge.

Si la gorge d'anneau est aménagée dans le piston, le dispositif d'étanchéité à coussin de fluide suivant la présente invention comprend un circuit de transfert de pression qui est constitué d'un tube d'arrivée de pression parallèle au cylindre et solidaire du piston, une première extrémité dudit tube débouchant à l'intérieur dudit piston tandis que la deuxième extrémité dudit tube débouche, via un alésage de chambre de pression dans lequel il peut translater longitudinalement et de façon étanche, dans une chambre de pression reliée à la source de fluide sous pression.

Le dispositif d'étanchéité à coussin de fluide suivant la présente invention comprend un tube d'arrivée de pression qui est relié à la chambre de répartition de pression par au moins un conduit radial d'arrivée de pression.

Le dispositif d'étanchéité à coussin de fluide suivant la présente invention comprend une chambre de pression qui est reliée à la source de fluide sous pression via un clapet anti-retour de pression proportionnelle qui permet au fluide d'anneau d'aller de ladite source à ladite chambre, mais non d'aller de ladite chambre à ladite source.

Le dispositif d'étanchéité à coussin de fluide suivant la présente invention comprend une gorge d'anneau qui héberge un ressort d'expansion qui prend appui sur ladite gorge pour exercer un effort radial sur la face cylindrique interne d'anneau dans le cas où la gorge d'anneau est aménagée dans le piston ou sur la face cylindrique externe d'anneau dans le cas où la gorge d'anneau est aménagée dans le cylindre.

Le dispositif d'étanchéité à coussin de fluide suivant la présente invention comprend un ressort d'expansion qui réalise par contact une étanchéité entre la gorge d'anneau et l'anneau continu perforé.

Le dispositif d'étanchéité à coussin de fluide suivant la présente invention comprend un ressort d'expansion qui est muni d'au moins un orifice de diffusion de fluide et/ou d'au moins une gorge de diffusion de fluide de sorte à constituer avec ledit orifice et/ou ladite gorge les moyens de diffusion de fluide d'anneau.

La description qui va suivre en regard des dessins annexés et donnés à titre d'exemples non limitatifs permettra de mieux comprendre l'invention, les caractéristiques qu'elle présente, et les avantages qu'elle est susceptible de procurer :
Figure 1 est une vue en coupe schématique du dispositif d'étanchéité à coussin de fluide suivant l'invention, les moyens d'étanchéité d'anneau étant constitués d'un joint torique.
Figure 2 est une vue en coupe schématique du dispositif d'étanchéité à coussin de fluide suivant l'invention, la gorge d'anneau présentant une butée radiale d'anneau qui limite la pénétration de l'anneau continu perforé dans ladite gorge tandis que ledit l'anneau est constitué d'un matériau souple et comprend un ressort circonférentiel d'anneau.
Figures 3 et 4 sont respectivement une coupe schématique et une vue tridimensionnelle éclatée du dispositif d'étanchéité à coussin de fluide suivant l'invention, la gorge d'anneau hébergeant un ressort d'expansion qui réalise par contact une étanchéité entre la gorge d'anneau et l'anneau continu perforé, ledit ressort étant en outre muni d'orifices de diffusion de fluide afin de constituer des moyens de diffusion de fluide d'anneau.
Figures 5 et 6 sont respectivement une coupe schématique et une vue tridimensionnelle éclatée du dispositif d'étanchéité à coussin de fluide suivant l'invention, une plaque de diffusion munie de gorges latérales de plaque de diffusion étant logée au fond de la gorge d'anneau tandis qu'une lèvre d'étanchéité d'anneau solidaire de l'anneau continu perforé constitue les moyens d'étanchéité d'anneau, et que l'anneau continu perforé comporte des dépouilles de placage de bord.
Figures 7 et 8 sont respectivement une coupe schématique et une vue tridimensionnelle éclatée du dispositif d'étanchéité à coussin de fluide suivant l'invention, la gorge d'anneau hébergeant un ressort d'expansion muni d'orifices de diffusion de fluide et de gorges de diffusion de fluide afin de constituer des moyens de diffusion de fluide d'anneau tandis que les moyens d'étanchéité d'anneau sont constitués de portion axiales désépaissies aménagées au voisinage des extrémités axiales de l'anneau continu perforé.
Figures 9 et 10 sont des vues en coupe schématique qui illustrent le fonctionnement du dispositif d'étanchéité à coussin de fluide suivant l'invention, les moyens d'étanchéité d'anneau étant constitués d'un joint torique.
Figure 11 est une vue tridimensionnelle en écorché d'une partie d'un moteur thermique à régénération dont le piston est équipé du dispositif d'étanchéité à coussin de fluide suivant l'invention.
Figure 12 est une vue tridimensionnelle éclatée d'une partie d'un moteur thermique à régénération dont le piston est équipé du dispositif d'étanchéité à coussin de fluide suivant l'invention.

### DESCRIPTION DE L'INVENTION :

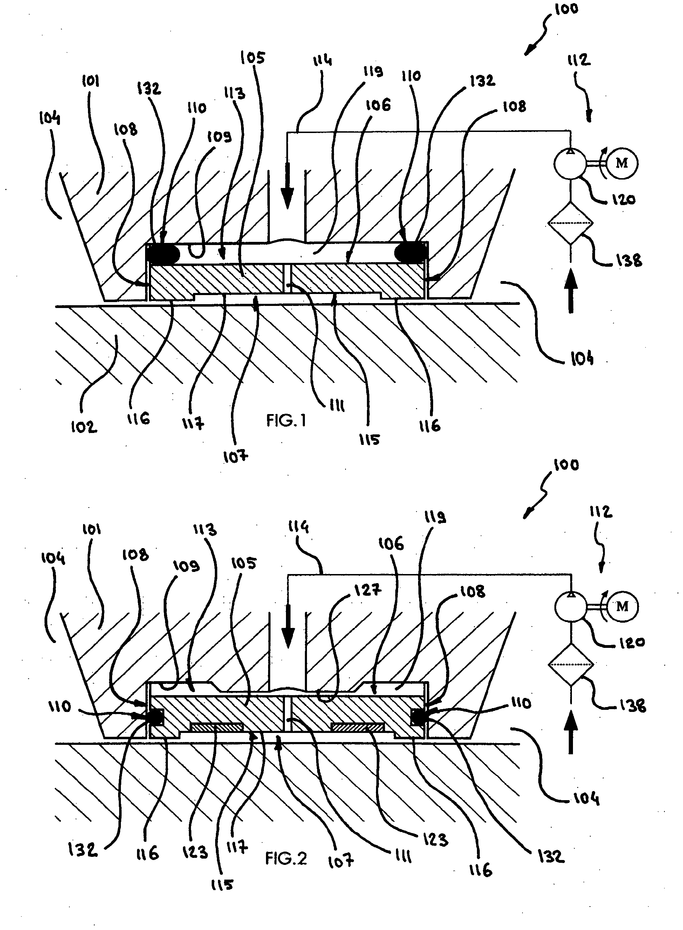

On a montré en figures 1 à 12 un dispositif d'étanchéité à coussin de fluide 100 qui peut être de l'air ou du liquide, divers détails de ses composants, ses variantes, et ses accessoires.

Le dispositif d'étanchéité à coussin de fluide 100 selon l'invention est prévu pour un piston 101 pouvant se déplacer en translation longitudinale dans un cylindre 102 et dans le même axe que ce dernier, ledit piston 101 et ledit cylindre 102 définissant, avec au moins une culasse 103, une chambre à étancher 104.

Comme le montrent les figures 1 à 12, le dispositif d'étanchéité à coussin de fluide 100 selon l'invention comprend au moins un anneau continu perforé 105 qui comporte une face cylindrique interne d'anneau 106, une face cylindrique externe d'anneau 107 et deux faces axiales d'anneau 108.

L'anneau 105 est logé dans au moins une gorge d'anneau 109 aménagée dans le piston 101 ou dans le cylindre 102, tandis que ledit anneau 105 peut se mouvoir radialement dans la gorge d'anneau 109 sans pouvoir sortir de cette dernière.

On note que si la gorge d'anneau 109 est aménagée dans le cylindre 102, le piston 101 est de type plongeur.

On constate que dans tous les cas, la gorge d'anneau 109 maintient directement ou indirectement l'anneau continu perforé 105 axialement solidaire du piston 101 si ladite gorge 109 est aménagée dans le piston 101, ou axialement solidaire du cylindre 102 si ladite gorge 109 est aménagée dans le cylindre 102.

On remarque, particulièrement sur les figures 1 à 10, que le dispositif d'étanchéité à coussin de fluide 100 selon l'invention comprend des moyens d'étanchéité d'anneau 110 qui réalisent une étanchéité entre chaque face axiale d'anneau 108 et la gorge d'anneau 109, de sorte que cette dernière définisse avec l'anneau continu perforé 105 une chambre de répartition de pression 119 raccordée par un circuit de transfert 114 à une source de fluide sous pression 112.

On notera que les moyens d'étanchéité d'anneau 110 peuvent être constitués d'un joint torique 132, d'un joint à lèvre, d'un joint composite, ou de tout joint ou segment d'étanchéité connu en soi quelle qu'en soit la matière ou la géométrie.

Il est également à noter que la face cylindrique interne d'anneau 106 ou la face cylindrique externe d'anneau 107 qui fait face à la gorge d'anneau 109 peut être une forme de révolution non-cylindrique de sorte que toutes les variations d'épaisseur de l'anneau continu perforé 105 soient possible sur sa longueur axiale, ledit anneau 105 pouvant être, soit une simple tôle circulaire déformée par galetage ou estampage, soit une pièce réalisée par laminage, par tout outil de coupe ou de rectification, ou par tout autre procédé de fabrication électrochimique ou autre connu de l'homme de l'art.

Les figures 1 à 10 permettent de constater que le dispositif d'étanchéité à coussin de fluide 100 selon l'invention comprend au moins un orifice calibré 111 qui traverse de part en part l'anneau continu perforé 105 dans son épaisseur radiale. On note que la première extrémité de l'orifice 111 débouche sur la face cylindrique interne d'anneau 106, tandis que la deuxième extrémité dudit orifice 111 débouche sur la face cylindrique externe d'anneau 107.

On voit aussi sur les figures 1 à 3, 5, 7 et 9 à 11 que le dispositif d'étanchéité à coussin de fluide 100 selon l'invention comprend au moins une source de fluide sous pression 112 d'où sort un fluide d'anneau 113 mis sous pression, la sortie de ladite source de fluide 112 étant reliée à la chambre de répartition de pression 119 par un circuit de transfert de pression 114 de sorte que le fluide d'anneau 113 exerce une pression soit sur la face cylindrique interne d'anneau 106 si la gorge d'anneau 109 est aménagée dans le piston 101, soit sur la face cylindrique externe d'anneau 107 si ladite gorge d'anneau 109 est aménagée dans le cylindre 102.

On note que le fluide d'anneau 113 peut être indifféremment un gaz ou un liquide et que la pression à laquelle il est soumis est toujours supérieure à celle régnant dans la chambre à étancher 104. En conséquence de ce qui précède, le diamètre de l'anneau continu perforé 105 augmente sous l'effet de la pression du fluide d'anneau 113 du fait de l'élasticité dudit anneau 105 de sorte que la face cylindrique externe d'anneau 107 tend à se rapprocher du cylindre 102 si la gorge d'anneau 109 est aménagée dans le piston 101, ou que le diamètre de l'anneau continu perforé 105 diminue sous l'effet conjugué de son élasticité et de la pression du fluide d'anneau 113 de sorte que la face cylindrique interne d'anneau 106 tend à se rapprocher du piston 101 si la gorge d'anneau 109 est aménagée dans le cylindre 102.

On note également que le diamètre de l'orifice calibré 111 est calculé pour que, tenant compte du débit de fluide d'anneau 113 provenant de la source de fluide sous pression 112, la pression qu'exerce ledit fluide d'anneau 113 - selon le cas sur la face cylindrique interne d'anneau 106 ou sur la face cylindrique externe d'anneau 107 - reste toujours supérieure à celle régnant dans la chambre à étancher 104.

On remarque que la source de fluide sous pression 112 peut être un compresseur de fluide pneumatique 120 à piston, à palettes, à vis, centrifuge ou de tout type connu de l'homme de l'art, ou une pompe hydraulique à piston, à engrenages, à palettes ou de tout autre type connu en soi. Le compresseur de fluide pneumatique 120, qui peut être une pompe hydraulique, peut coopérer ou non avec un accumulateur de pression connu en soi. On note qu'un filtre à fluide d'anneau 138 à mailles fines peut être monté en amont ou en aval du compresseur de fluide pneumatique 120 de sorte à débarrasser le fluide d'anneau 113 de toute particule excédant une certaine taille avant que ledit fluide 113 ne soit introduit dans la chambre de répartition de pression 119.

Les figures 1 à 10 montrent que le dispositif d'étanchéité à coussin de fluide 100 selon l'invention comprend un anneau continu perforé 105 comportant au moins une surface de portance sur coussin de fluide 116 disposée à l'opposée de la chambre de répartition de pression 119.

Le dispositif d'étanchéité à coussin de fluide 100 comprend un évidement de contrepression 115 axialement non-débouchant aménagé en creux sur la face cylindrique externe d'anneau 107 dans le cas où la gorge d'anneau 106 est aménagée dans le piston 101, de manière que la surface non-occupée par l'évidement de contrepression 115 de la face cylindrique externe d'anneau 107 qui reçoit ledit évidement 115 constitue la surface de portance sur coussin de fluide 116.

Selon un variante le dispositif d'étanchéité à coussin de fluide 100 peut comprendre un évidement de contrepression 115 axialement non-débouchant aménagé en creux sur la face cylindrique interne d'anneau 107 dans le cas où la gorge d'anneau est aménagée dans le cylindre 102, de manière que la surface non-occupée par l'évidement de contrepression 115 de la face cylindrique interne d'anneau 106 qui reçoit ledit évidement 115 constitue la surface de portance sur coussin de fluide 116.

On note que l'étendue de l'évidement de contrepression 115 peut être de toute dimension depuis la plus petite, c'est à dire équivalente au rayon non-nul du débouché de l'orifice calibré 111, à la plus grande c'est à dire juste sensiblement inférieure à celle de la face cylindrique externe d'anneau 107 ou de la face cylindrique interne d'anneau 106 qui reçoit ledit évidement 115. Il est précisé que le piston 101 peut comporter au voisinage de la gorge d'anneau 109 une gorge de décompression ou des rainures ou tout autre canal interne ou de surface de quelque type que ce soit qui relie ledit voisinage avec la chambre à étancher 104.

A titre de variante de réalisation le dispositif d'étanchéité à coussin de fluide 100 selon l'invention montrée en figures 1 à 10, l'évidement de contrepression 115 peut être constitué d'une gorge de contrepression 117 de faible profondeur plus ou moins centrée sur la longueur axiale de la face cylindrique externe d'anneau 107 ou de la face cylindrique interne d'anneau 106 qui reçoit ledit évidement 115, ladite gorge de contrepression 117 étant réalisée sur toute la circonférence de ladite face cylindrique externe d'anneau 107 ou de ladite face cylindrique interne d'anneau 106, les surfaces annulaires qui bordent ladite gorge de contrepression 117 constituant chacune une surface de portance sur coussin de fluide 116.

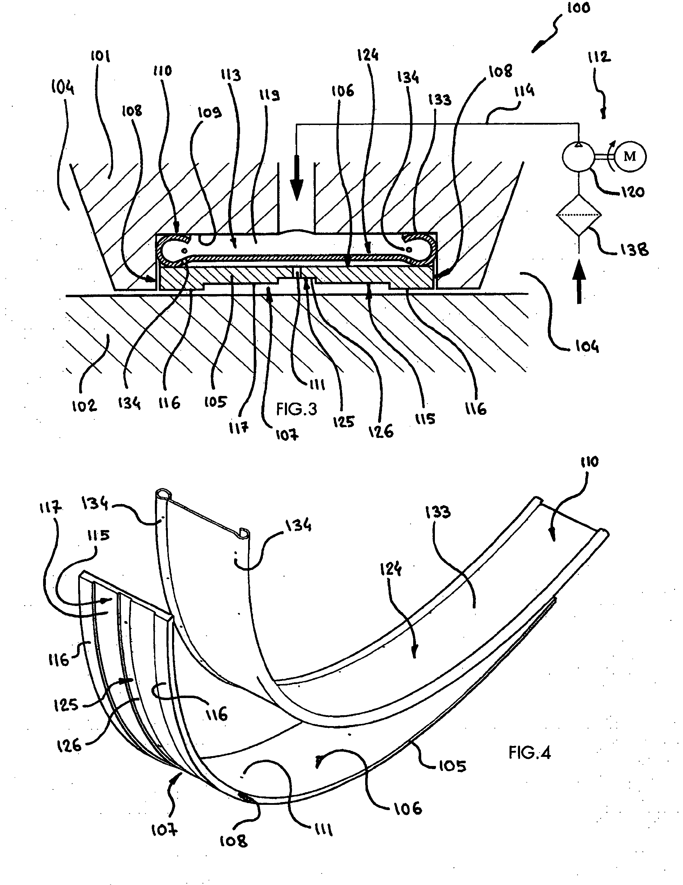

A titre d'autre variante montrée en figures 3 à 10, l'orifice calibré 111 peut déboucher dans l'évidement de contrepression 115 par l'intermédiaire d'un évidement de distribution de pression 125 aménagé en creux au fond dudit évidement de contrepression 115.

Les figures 3 à 10 montrent d'ailleurs que l'évidement de distribution de pression 125 peut être constitué d'une gorge de distribution de pression 126 plus ou moins centrée sur la longueur axiale de la face cylindrique externe d'anneau 107 ou de la face cylindrique interne d'anneau 106 qui reçoit l'évidement de contrepression 115, ladite gorge de distribution de pression 126 étant réalisée sur toute la circonférence de ladite face cylindrique externe d'anneau 107 ou de ladite face cylindrique interne d'anneau 106.

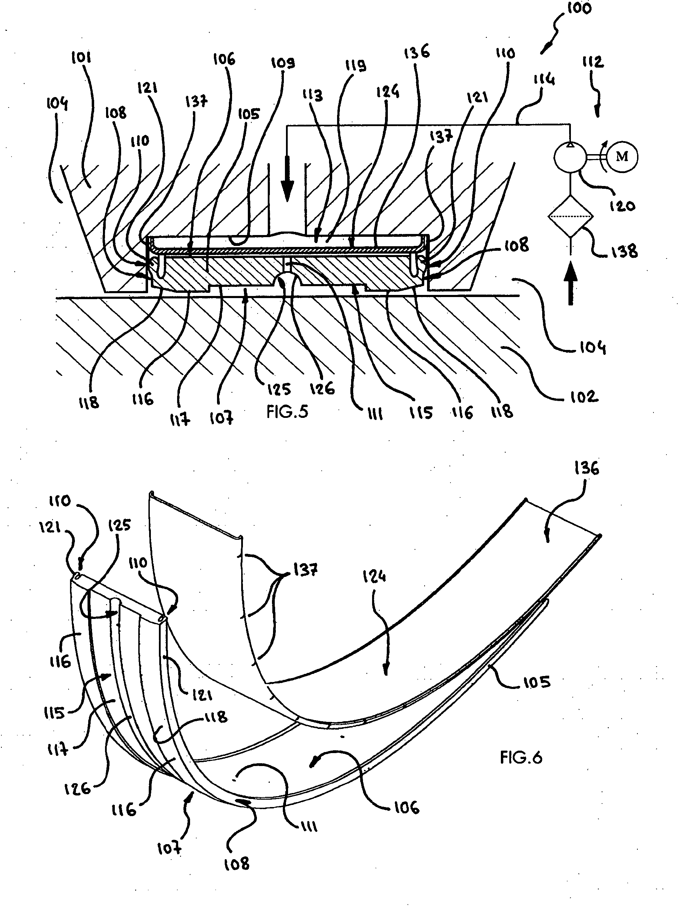

Les figures 5 et 6 montrent en outre qu'au moins l'un des deux bords axiaux de la face cylindrique externe d'anneau 107 ou de la face cylindrique interne d'anneau 106 qui reçoit l'évidement de contrepression 115 peut se terminer par une dépouille de placage de bord 118 qui permet à la pression du fluide d'anneau 113 que contient la chambre de répartition de pression 119 d'exercer un effort localement plus élevé sur la surface de portance sur coussin de fluide 116 qui jouxte ladite dépouille de placage de bord 118.

Les figures 5 et 6 montrent aussi que les moyens d'étanchéité d'anneau 110 peuvent être constitués d'une lèvre d'étanchéité d'anneau 121 qui est solidaire de l'anneau continu perforé 105 d'une part, et qui établit un contact étanche avec l'intérieur ou le rebord de la gorge d'anneau 109 d'autre part, ladite lèvre d'étanchéité 121 pouvant être montée rapportée sur l'anneau continu perforé 105 ou pouvant être réalisée dans la même pièce de matière que ledit anneau 105. On note qu'en alternative, la lèvre d'étanchéité d'anneau 121 peut être solidaire de la gorge d'anneau 109 d'une part, et établir un contact étanche avec l'anneau continu perforé 105 d'autre part. En ce cas, ladite lèvre 121 peut être soit montée rapportée dans la gorge d'anneau 109 ou sur le rebord de cette dernière, soit être réalisée dans la même pièce de matière que ladite gorge 109.

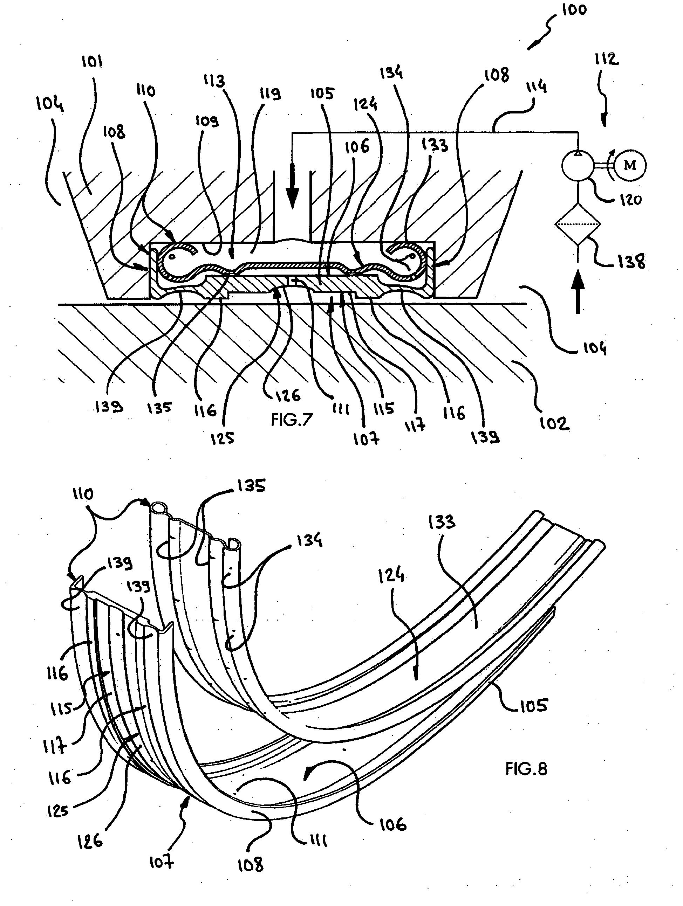

Une autre variante de réalisation du dispositif d'étanchéité à coussin de fluide 100 selon l'invention est montrée en figures 7 et 8 selon laquelle les moyens d'étanchéité d'anneau 110 peuvent être constitués d'une portion axiale désépaissie 139 aménagée au voisinage de l'une au moins des extrémités axiales de l'anneau continu perforé 105, ladite portion 139 étant solidaire de la gorge d'anneau 109 de façon étanche, et étant suffisamment souple pour permettre au diamètre de l'anneau continu perforé 105 d'augmenter ou de diminuer par rapport à celui de ladite gorge 109. On note que la portion axiale désépaissie 139 est conçue de telle sorte que le matériau qui la constitue ne risque en aucun cas de céder que ce soit sous l'effet de la pression du fluide d'anneau 113, ou que ce soit à cause d'une contrainte répétée incompatible avec les limites de résistance à la fatigue dudit matériau.

La figure 2 montre quant à elle que l'anneau continu perforé 105 peut être constitué d'un matériau souple et comprendre au moins un ressort circonférentiel d'anneau 123 qui tend à réduire le diamètre dudit anneau 105 si la gorge d'anneau 106 est aménagée dans le piston 101 ou qui tend à augmenter le diamètre dudit anneau 105 si la gorge d'anneau 106 est aménagée dans le cylindre 102. On note que ledit matériau souple peut être un élastomère ou un polymère chargé ou non de particules anti abrasives ou antifriction cependant que le ressort circonférentiel d'anneau 123 peut être inclus dans ledit matériau ou maintenu en surface de ce dernier au moyen d'une gorge, d'un logement ou de butées. Le ressort circonférentiel d'anneau 123 peut être hélicoïdal à l'instar des ressorts de joint de queue de soupape, être une dispositif fendue ou être de tout autre type lui permettant de remplir la fonction recherchée.

On apprend des figures 3 à 8 que la chambre de répartition de pression 119 peut héberger des moyens de diffusion de fluide d'anneau 124 qui forcent le fluide d'anneau 113 en provenance du circuit de transfert de pression 114 à lécher la plus grande surface possible de la face cylindrique interne d'anneau 106 dans le cas où la gorge d'anneau 106 est aménagée dans le piston 101 ou la plus la grande surface possible de la face cylindrique externe d'anneau 107 dans le cas où la gorge d'anneau 106 est aménagée dans le cylindre 102, avant de s'échapper via l'orifice calibré 111. Cette disposition permet au fluide d'anneau 113 de refroidir l'anneau continu perforé 105 ce dernier cédant audit fluide 113 une partie de sa chaleur.

Une autre variante montrée en figure 5 et 6 du dispositif d'étanchéité à coussin de fluide 100 selon l'invention consiste en ce que les moyens de diffusion de fluide d'anneau 124 peuvent être constitués d'une plaque de diffusion 136 logée au fond de la gorge d'anneau 106, l'une au moins des extrémités axiales de ladite plaque 136 étant munie d'au moins un orifice ou gorge latérale de plaque de diffusion 137 qui force le fluide d'anneau 113 provenant du circuit de transfert de pression 114 à déboucher dans la chambre de répartition de pression 119 par l'une au moins de ses extrémités axiales.

On voit aussi en figure 2 que la gorge d'anneau 109 peut présenter une butée radiale d'anneau 127 qui limite la pénétration de l'anneau continu perforé 105 dans ladite gorge 109, ladite butée 127 pouvant être - à titre non-limitatif - une surface cylindrique constituant le fond de la gorge d'anneau 109, ou au moins une arête circulaire ou des plots aménagés au fond de ladite gorge 109, ou au moins un chanfrein ou rebord aménagé sur au moins l'un des deux bords de ladite gorge 109.

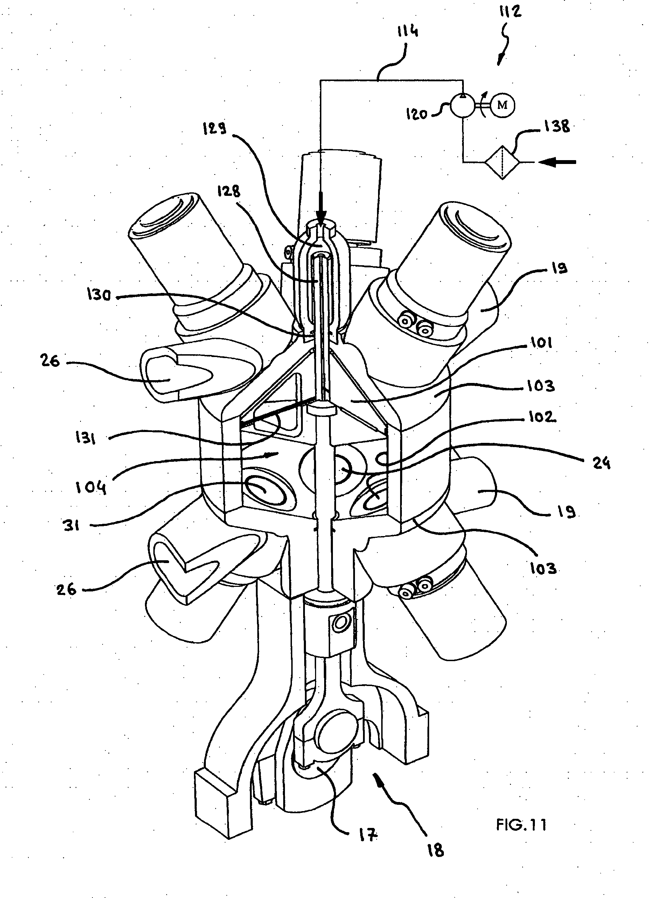

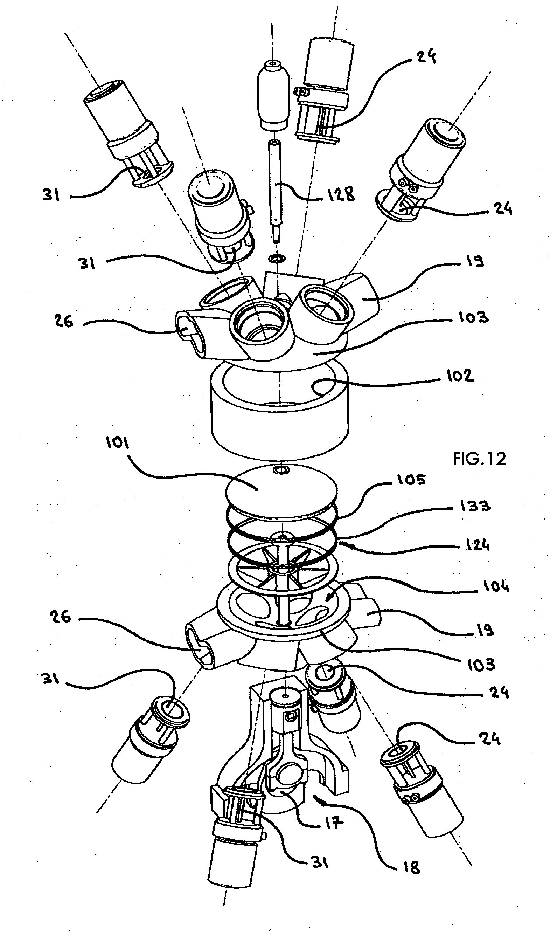

Les figures 11 et 12 montrent en outre que si la gorge d'anneau 109 est aménagée dans le piston 101, le circuit de transfert de pression 114 peut être constitué d'un tube d'arrivée de pression 128 parallèle au cylindre 102 et solidaire du piston 101, une première extrémité dudit tube 128 débouchant à l'intérieur dudit piston 101 tandis que la deuxième extrémité dudit tube 128 débouche, via un alésage de chambre de pression 130 dans lequel il peut translater longitudinalement et de façon étanche, dans une chambre de pression 129 reliée à la source de fluide sous pression 112. On note que la deuxième extrémité du tube d'arrivée de pression 128 qui translate dans l'alésage de chambre de pression 130 peut comporter un joint d'étanchéité qui glisse dans ledit alésage 130 pour réaliser une étanchéité. En alternative, l'alésage de chambre de pression 130 peut comporter un joint d'étanchéité qui glisse autour de ladite deuxième extrémité du tube d'arrivée de pression 128 pour réaliser une étanchéité.

La figure 11 montre que le tube d'arrivée de pression 128 peut être relié à la chambre de répartition de pression 119 par au moins un conduit radial d'arrivée de pression 131 qui peut être réalisé dans la masse du piston 101 ou qui peut être rapporté dans ce dernier par exemple par assemblage de tubes comportant ou non des joints d'étanchéité et/ou de dilatation.

On notera que la chambre de pression 129 peut être reliée à la source de fluide sous pression 112 via un clapet anti-retour de pression proportionnelle qui permet au fluide d'anneau 113 d'aller de ladite source 112 à ladite chambre 129, mais non d'aller de ladite chambre 129 à ladite source 112. Cette disposition particulière permet d'utiliser la variation du volume de la chambre de pression 129 que produisent les mouvements de va-et-vient de la deuxième extrémité du tube d'arrivée de pression 128 pour augmenter la pression qui règne dans la chambre de répartition de pression 119 lorsque le piston 101 est au voisinage de son point mort haut.

A titre d'autre variante de réalisation du dispositif d'étanchéité à coussin de fluide 100 selon l'invention, les figures 3, 4, 7, 8 et 12 illustrent que la gorge d'anneau 109 peut héberger un ressort d'expansion 133 qui prend appui sur ladite gorge 109 pour exercer un effort radial sur la face cylindrique interne d'anneau 106 dans le cas où la gorge d'anneau 106 est aménagée dans le piston 101 ou sur la face cylindrique externe d'anneau 107 dans le cas où la gorge d'anneau 106 est aménagée dans le cylindre 102, ledit ressort 133 pouvant être hélicoïdal, à lame, ondulé ou de type connu de l'homme de l'art.

On constate, particulièrement en figures 3, 4, 7 et 8, que le ressort d'expansion 133 peut réaliser par contact une étanchéité entre la gorge d'anneau 109 et l'anneau continu perforé 105.

Lesdites figurent montrent également que le ressort d'expansion 133 peut être muni d'au moins un orifice de diffusion de fluide 134 et/ou d'au moins une gorge de diffusion de fluide 135 de sorte à constituer avec ledit orifice 134 et/ou ladite gorge 135 les moyens de diffusion de fluide d'anneau 124.

### FONCTIONNEMENT DE L'INVENTION :

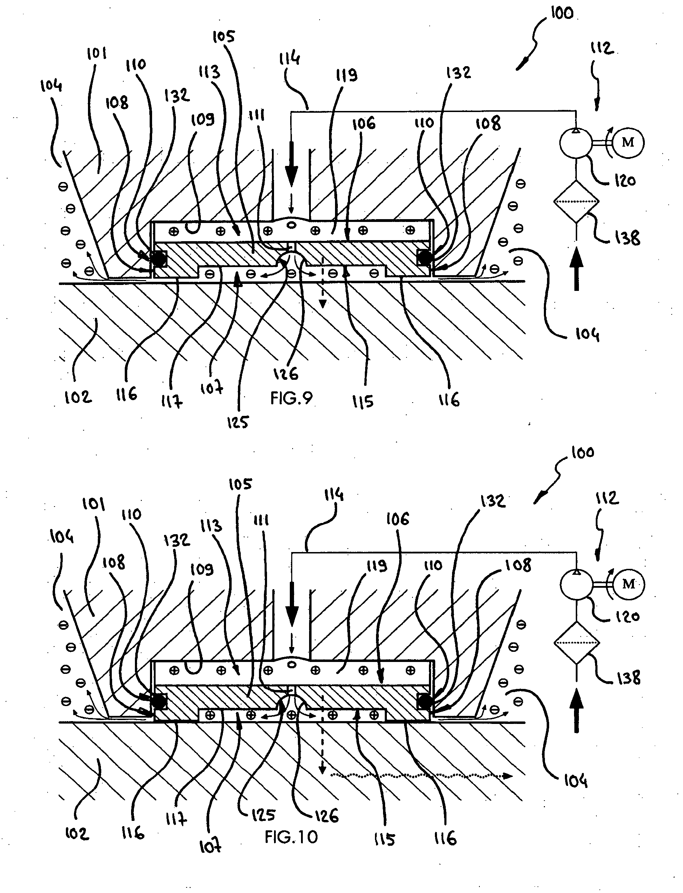

Le fonctionnement du dispositif d'étanchéité à coussin de fluide 100 selon l'invention est compréhensible à la vue des figures 9 et 10 qui montrent notamment des moyens d'étanchéité d'anneau 110 constitués d'un joint torique 132.

Selon l'exemple de réalisation non-limitatif du dispositif d'étanchéité 100 montré en figures 9 et 10, la gorge d'anneau 109 est aménagée dans le piston 101 et non dans le cylindre 102. En conséquence, la chambre de répartition de pression 119 est située du coté de la face cylindrique interne d'anneau 106.

On note que sur lesdites figures 9 et 10 des symboles « + » et « - » entourés d'un cercle ont été ajoutés qui illustrent l'écart entre la pression régnant dans la chambre de répartition de pression 119 d'une part, et celle régnant dans la gorge de distribution de pression 126, la gorge de contrepression 117 et la chambre à étancher 104 d'autre part.

Nous supposerons que la pression maximale régnant dans la chambre à étancher 104 est de vingt bars, tandis que la source de fluide sous pression 112 produit un débit de fluide d'anneau 113 dont la pression maximale est de quarante bars.

La figure 9 montre le dispositif d'étanchéité à coussin de fluide 100 selon l'invention lorsque la source de fluide sous pression 112 commence à peine à débiter du fluide d'anneau 113 et que la chambre de répartition de pression 119 commence tout juste à monter en pression. Nous supposerons qu'à ce stade, la pression régnant dans la chambre à étancher 104 n'est encore que de un bar absolu.

On remarque que la chambre de répartition de pression 119 étant rendue étanche notamment grâce au joint torique 132, le fluide d'anneau 113 n'a d'autre issue que l'orifice calibré 111 pour s'échapper de ladite chambre 119. Au stade de fonctionnement du dispositif d'étanchéité à coussin de fluide 100 selon l'invention illustré en figure 9, le plein débit de fluide d'anneau 113 en provenance de la source de fluide sous pression 112 n'est pas encore établi de sorte que la pression régnant dans la chambre de répartition de pression 119 n'est que de dix bars.

Malgré que la pression de quarante bars ne soit pas encore produite par la source de fluide sous pression 112, on remarque que l'anneau continu perforé 105 commence à gonfler malgré la fuite de fluide d'anneau 113 via l'orifice calibré 111 car la pression régnant dans la chambre de répartition de pression 119 est supérieure à celle régnant dans la gorge de distribution de pression 126, la gorge de contrepression 117 et la chambre à étancher 104.

Le gonflement de l'anneau continu perforé 105 est symbolisé par la flèche en trait en pointillés. Le débit de fluide d'anneau 113 qui s'échappe par l'orifice calibré 111 rejoint la chambre à étancher 104 respectivement via la gorge de distribution de pression 126, la gorge de contrepression 117 et l'interstice que constitue le jeu laissé entre le piston 101 et le cylindre 102.

On notera que la section de l'orifice calibré 111 et le débit de fluide d'anneau 113 généré par la source de fluide sous pression 112 sont calculés pour que la pression de quarante bars - lorsqu'elle est effectivement produite par ladite source 112 - puisse être maintenue dans la chambre de répartition de pression 119 malgré que le fluide d'anneau 113 s'échappe par l'orifice calibré 111. Ceci revient à dire que si aucun obstacle ne limite le gonflement de l'anneau continu perforé 105, ce dernier reçoit suffisamment de débit de fluide d'anneau 113 de la part de la source de fluide sous pression 112 pour gonfler autant que s'il était parfaitement étanche, c'est à dire autant que s'il ne comportait pas d'orifice calibré 111.

L'épaisseur radiale de l'anneau continu perforé 105 est quant à elle calculée pour que - tenant compte de l'élasticité du matériau qui constitue ledit anneau 105 - lorsque une pression de quarante bars est appliquée sur la face cylindrique interne d'anneau 106, le diamètre extérieur de l'anneau continu perforé 105 soit au moins égal voire supérieur au diamètre intérieur du cylindre 102.

La pression montant graduellement dans la chambre de répartition de pression 119, le diamètre de l'anneau continu perforé 105 augmente jusqu'à ce que les surfaces de portance sur coussin de fluide 116 se retrouvent à une très faible distance de la paroi du cylindre 102. C'est ce que représente la figure 10.

A ce stade de fonctionnement du dispositif d'étanchéité à coussin de fluide 100 selon l'invention, une perte de charge significative est créée entre les surfaces de portance sur coussin de fluide 116 et le cylindre 102, ladite perte s'opposant au passage du fluide d'anneau 113. En conséquence, la pression qui règne dans la gorge de distribution de pression 126 et la gorge de contrepression 117 augmente au point d'être proche de celle qui règne dans la chambre de répartition de pression 119. Il résulte de cela que la pression régnant dans ladite chambre 119 n'exerce plus un effort radial sur l'anneau continu perforé 105 qu'au niveau des surfaces de portance sur coussin de fluide 116. Consécutivement à cela, du fait de son élasticité qui lui confère les attributs d'un ressort et qui le rend résistant au gonflement, l'anneau continu perforé 105 se rétracte, ce qui a pour effet d'une part, de réduire la perte de charge entre les surfaces de portance sur coussin de fluide 116 et le cylindre 102 et d'autre part, de faire baisser la pression régnant dans la gorge de distribution de pression 126 et la gorge de contrepression 117, ce qui fait à nouveau gonfler l'anneau continu perforé 105.

Comme on peut le constater, l'effort de constriction qui résulte de la raideur de l'anneau continu perforé 105 et qui s'oppose au gonflement de ce dernier d'une part, et la perte de charge créée entre les surfaces de portance sur coussin de fluide 116 et le cylindre 102 d'autre part, conduisent à une situation relativement instable de l'anneau continu perforé 105. En effet, lorsque le diamètre dudit anneau 105 augmente, les conditions qui ont conduit à ladite augmentation de diamètre disparaissent tandis que quand le diamètre dudit anneau 105 diminue, les conditions qui conduisent à ladite augmentation sont à nouveau réunies.

Il résulte de ceci que les surfaces de portance sur coussin de fluide 116 n'ont d'autre choix que de trouver une position intermédiaire relativement stable à très faible distance du cylindre 102. Ladite distance résulte du jeu initial entre le piston 101 et le cylindre 102, de la pression qui règne dans la chambre de répartition de pression 119, de la raideur de l'anneau continu perforé 105, et de longueur axiale totale des surfaces de portance sur coussin de fluide 116 par rapport à la longueur axiale totale de la face cylindrique interne d'anneau 106 qui est exposée à la pression du fluide d'anneau 113. Ladite distance résulte également de la profondeur de la gorge de contrepression 117 qui constitue en elle-même une perte de charge additionnelle.

Selon l'exemple de fonctionnement considéré ici, une fois la pression de quarante bars établie dans la chambre de répartition de pression 119, la distance entre les surfaces de portance sur coussin de fluide 116 et le cylindre 102 est de l'ordre soit de quelques microns, soit de l'ordre du micron voire de la fraction de micron. C'est cette courte distance qui, combinée avec un écoulement de fluide d'anneau 113 allant toujours depuis l'évidement de contrepression 115 vers la chambre à étancher 104 et non le contraire, réalise une étanchéité poussée entre le piston 101 et le cylindre 102.

On remarque que tenant compte du monde de fonctionnement particulier du dispositif d'étanchéité à coussin de fluide 100 selon l'invention, l'anneau continu perforé 105 tend naturellement à ce centrer dans le cylindre 102 et à s'accommoder des éventuels défauts de circularité ou de cylindricité dudit cylindre 102. En effet, la position de l'anneau continu perforé 105 résulte d'un équilibre entre, de première part, l'effort général de constriction dudit anneau 105 donné par la raideur de ce dernier et, de deuxième part, les efforts radiaux locaux appliqués en chaque point de la périphérie et de la longueur axiale de l'anneau continu perforé 105 lesdits efforts résultant de l'interaction aérodynamique entre les surfaces de portance sur coussin de fluide 116 et le cylindre 102.

On note également que la conception du dispositif d'étanchéité coussin de fluide 100 selon l'invention laisse de nombreuses possibilités d'adaptation à chaque application. Par exemple, toutes choses étant égales par ailleurs, la section de l'orifice calibré 111 permet de régler la distance laissée entre les surfaces de portance sur coussin de fluide 116 et le cylindre 102, ladite distance pouvant aussi être réglée par la raideur de l'anneau continu perforé 105 laquelle dépend notamment de son épaisseur.

On déduit aisément du fonctionnement qui vient être décrit qu'il est indispensable que la pression générée par la source de fluide sous pression 112 soit toujours supérieure à celle qui règne dans la chambre à étancher 104. Ceci n'exclut pas la possibilité - sur des échelles de temps suffisamment longues - d'adapter la pression générée par la source de fluide sous pression 112 à la pression maximale survenant dans la chambre à étancher 104. On note toutefois que si la chambre de pression 129 possède un clapet anti-retour de pression proportionnelle, la pression qui règne dans la chambre de répartition de pression 119 peut varier sur de courtes échelles de temps à l'instar de la pression qui règne dans la chambre à étancher 104. Cette stratégie peut par exemple être retenue si l'application qui reçoit le dispositif d'étanchéité à coussin de fluide 100 selon l'invention est un compresseur pneumatique.

Ainsi, on comprend que le dispositif d'étanchéité à coussin de fluide 100 selon l'invention ouvre accès à des possibilités nouvelles qui sont inaccessibles aux dispositifs conventionnels d'étanchéité pour piston.

Notamment, il devient possible de concevoir un moteur à régénération au moyen de machines volumétriques à piston dont le principe général et l'organisation s'apparente à ceux des moteurs à cycle de Brayton à régénération ordinairement mis en oeuvre au moyen de compresseurs et de turbines centrifuges. On notera que ledit moteur à régénération est très différent des moteurs à compresseurs et de turbines centrifuges tant s'agissant de son mode de réalisation que s'agissant des innovations auxquelles il a recours pour être à la fois réalisable et efficace. Un tel moteur à régénération à pistons nécessite que la température de fonctionnement du cylindre 102 et du piston 101 soit de l'ordre de mille degrés Celsius voire davantage. A une telle température, il est exclu de recourir à quelque lubrification par huile que ce soit d'un segment ou d'une bague. Par ailleurs, quel que soit le matériau utilisé pour réaliser ledit cylindre 102 et ledit piston 101 qu'il s'agisse par exemple de céramique à base d'alumine, de zircone ou de carbure de silicium ou de tout autre matériau, à une telle température, tout contact entre ledit cylindre 102 et un segment ou un joint d'étanchéité est impossible.

Le dispositif d'étanchéité à coussin de fluide 100 selon l'invention est toutefois compatible avec de telles conditions opérationnelles. En effet, l'anneau continu perforé 105 ne touche jamais le cylindre 102 car il est séparé de ce dernier par un film de fluide d'anneau 113 qui peut être - à titre d'exemple non-limitatif - de l'air dont est constituée l'atmosphère. Par ailleurs, l'anneau continu perforé 105 est constamment refroidi par le débit de fluide d'anneau 113 qui le traverse et qui lèche la face cylindrique interne d'anneau 106 et la face cylindrique externe d'anneau 107. Il faut à ce titre rappeler que pour aider à ce refroidissement, la chambre de répartition de pression 119 peut héberger des moyens de diffusion de fluide d'anneau 124 tels que ceux montrés en figures 3 à 8. Ledit refroidissement permet notamment d'utiliser un anneau continu perforé 105 en acier possédant la résistance mécanique recherchée, sans dépasser la température de revenu dudit acier qui n'est que de quelques centaines de degrés Celsius. L'utilisation d'un anneau continu perforé 105 en acier porté à quelques centaines de degrés dans un cylindre 102 en céramique porté à plus de mille degrés Celsius permet en outre de maîtriser le jeu de fonctionnement entre ledit anneau 105 et ledit cylindre 102 dans de bonnes conditions, ce que le calcul démontre aisément. Ceci provient notamment du coefficient de dilatation de l'acier qui est supérieur à celui de la céramique que ledit acier soit ou non revêtu d'une couche protectrice qui le protège de l'oxydation.

On note aussi que le refroidissement de l'anneau continu perforé 105 a pour corollaire le réchauffement local du fluide d'anneau 113 ce qui permet d'augmenter le volume dudit fluide 113. Ceci permet avantageusement de réduire le débit de fluide d'anneau 113 produit par la source de fluide sous pression 112 tout en permettant à la dispositif d'étanchéité continue extensible à coussin de fluide 100 selon l'invention de fonctionner dans les conditions recherchées. On note également qu'il est possible de régler la température du fluide d'anneau 113 avant de l'introduire dans la chambre de pression 129 ce qui permet de régler la température de fonctionnement de l'anneau continu perforé 105 et donc, le jeu de fonctionnement entre ledit anneau 105 et le cylindre 102.

On remarque également que le débit de fluide d'anneau 113 qui s'écoule entre les surfaces de portance sur coussin de fluide 116 et le cylindre 102 assure le nettoyage permanent de ce dernier. Ainsi, les particules et résidus solides de toute nature ne peuvent pas adhérer au cylindre 102. En outre, il n'est pas possible à une particule provenant de la chambre à étancher 104 de passer entre les surfaces de portance sur coussin de fluide 116 et le cylindre 102 car la pression des gaz dans ladite chambre 104 est inférieure à celle régnant dans la chambre de répartition de pression 119. On notera que pour garantir un fonctionnement optimal aux surfaces de portance sur coussin de fluide 116, il est possible de prévoir un filtre à fluide d'anneau 138 qui débarrasse le fluide d'anneau 113 de toute particule dont le diamètre est par exemple supérieur à un micron avant que ledit fluide 113 ne soit introduit dans la chambre de répartition de pression 119.

En conséquence de ce qui vient d'être dit, le dispositif d'étanchéité à coussin de fluide 100 suivant l'invention permet notamment de réaliser un moteur thermique à régénération à haut rendement dont le cylindre 102 qui est soumis à des températures élevées est montré en figures 11 et 12. On remarque sur lesdites figures que ledit moteur thermique comporte notamment deux culasses 103 et un piston 101 relié à un arbre de sortie de puissance 17 par des moyens mécaniques de transmission 18. Le piston 101, le cylindre 102 et les culasses 103 définissent deux chambres à étancher 104 pouvant chacune être mises en relation soit avec un conduit d'admission des gaz chauds 19 par des soupapes doseuses d'admission 24 soit avec un conduit d'échappement des gaz détendus 26 par des soupapes d'échappement 31.

On note en figures 11 et 12 la présence du tube d'arrivée de pression 128 orienté parallèlement au cylindre 102 et solidaire du piston 101, une première extrémité dudit tube 128 débouchant à l'intérieur du piston 101 tandis que la deuxième extrémité dudit tube 128 débouche, via l'alésage de chambre de pression 130 dans lequel il peut translater longitudinalement et de façon étanche, dans la chambre de pression 129 laquelle est reliée à la source de fluide sous pression 112 par le circuit de transfert de pression 114. On remarque également - particulièrement en figure 11 - que le tube d'arrivée de pression 128 est relié à la chambre de répartition de pression 119 par un conduit radial d'arrivée de pression 131 rapporté dans le piston 101.

Les possibilités du dispositif d'étanchéité à coussin de fluide 100 suivant l'invention ne s'en limitent pas aux applications qui viennent d'être décrites et il doit d'ailleurs être entendu que la description qui précède n'a été donnée qu'à titre d'exemple et qu'elle ne limite nullement le domaine de ladite invention dont on ne sortirait pas en remplaçant les détails d'exécution décrits par tout autre équivalent. L'invention est uniquement limitée par la portée des revendications en annexe.

## Revendications

1. Dispositif d'étanchéité à coussin de fluide (100) pour un piston (101) pouvant se déplacer en translation longitudinale dans un cylindre (102) et dans le même axe que ce dernier, ledit piston (101) et ledit cylindre (102) définissant, avec au moins une culasse (103), une chambre à étancher (104) **caractérisé en ce qu'il** comprend :
• Ledit piston (101) ou ledit cylindre (102), celui-ci comprenant au moins une gorge d'anneau (109);
• Au moins un anneau continu perforé (105) qui comporte une face cylindrique interne d'anneau (106), une face cylindrique externe d'anneau (107) et deux faces axiales d'anneau (108) ledit anneau (105) étant logé dans ladite gorge d'anneau (109) aménagée dans ledit piston (101) ou dans ledit cylindre (102), tandis que ledit anneau (105) peut se mouvoir radialement dans ladite gorge d'anneau (109) sans pouvoir sortir de cette dernière, ledit anneau (105) étant suffisamment souple pour permettre à son diamètre d'augmenter ou de diminuer par rapport à celui de ladite gorge (109) sous l'effet d'une pression d'une source de fluide sous pression (112) ;
• Des moyens d'étanchéité d'anneau (110) qui réalisent une étanchéité entre chaque face axiale d'anneau (108) et la gorge d'anneau (109), de sorte que cette dernière définit avec l'anneau continu perforé (105) une chambre de répartition de pression (119) raccordée par un circuit de transfert (114) à la source de fluide sous pression (112) ;
• Au moins un orifice calibré (111) qui traverse de part en part l'anneau continu perforé (105) dans son épaisseur radiale ;
• Au moins une surface de portance sur coussin de fluide (116) que comporte l'anneau continu perforé (105), ladite surface de portance (116) étant disposée à l'opposé de la chambre de répartition de pression (119).

2. Dispositif d'étanchéité à coussin de fluide suivant la revendication 1, **caractérisé en ce qu'il** comprend un évidement de contrepression (115) axialement non-débouchant aménagé en creux sur la face cylindrique externe d'anneau (107) dans le cas où la gorge d'anneau (106) est aménagée dans le piston (101), de manière que la surface non-occupée par l'évidement de contrepression (115) de la face cylindrique externe d'anneau (107) qui reçoit ledit évidement (115) constitue la surface de portance sur coussin de fluide (116).

3. Dispositif d'étanchéité à coussin de fluide suivant la revendication 1, **caractérisé en ce qu'il** comprend un évidement de contrepression (115) axialement non-débouchant aménagé en creux sur la face cylindrique interne d'anneau (106) dans le cas où la gorge d'anneau est aménagée dans le cylindre (102), de manière que la surface non-occupée par l'évidement de contrepression (115) de la face cylindrique interne d'anneau (106) qui reçoit ledit évidement (115) constitue la surface de portance sur coussin de fluide (116).

4. Dispositif d'étanchéité à coussin de fluide suivant l'une quelconque des revendication 1 à 3, **caractérisé en ce que** l'évidement de contrepression (115) est constitué d'une gorge de contrepression (117) de faible profondeur plus ou moins centrée sur la longueur axiale de la face cylindrique externe d'anneau (107) ou de la face cylindrique interne d'anneau (106) qui reçoit ledit évidement (115), ladite gorge de contrepression (117) étant réalisée sur toute la circonférence de ladite face cylindrique externe d'anneau (107) ou de ladite face cylindrique interne d'anneau (106).

5. Dispositif d'étanchéité à coussin de fluide suivant les revendications 1 à 3, **caractérisé en qu'il** comprend un orifice calibré (111) qui débouche dans l'évidement de contrepression (115).

6. Dispositif d'étanchéité à coussin de fluide suivant la revendication 5, **caractérisé en ce que** l'orifice calibré (111) débouche dans l'évidement de contrepression (115) par l'intermédiaire d'un évidement de distribution de pression (125) aménagé en creux au fond dudit évidement de contrepression (115).

7. Dispositif d'étanchéité à coussin de fluide suivant la revendication 6, **caractérisé en ce que** l'évidement de distribution de pression (125) est constitué d'une gorge de distribution de pression (126) plus ou moins centrée sur la longueur axiale de la face cylindrique externe d'anneau (107) ou de la face cylindrique interne d'anneau (106) qui reçoit l'évidement de contrepression (115), ladite gorge de distribution de pression (126) étant réalisée sur toute la circonférence de ladite face cylindrique externe d'anneau (107) ou de ladite face cylindrique interne d'anneau (106).

8. Dispositif d'étanchéité à coussin de fluide suivant la revendication 1, **caractérisé en ce qu'au** moins l'un des deux bords axiaux de la face cylindrique externe d'anneau (107) ou de la face cylindrique interne d'anneau (106) qui reçoit l'évidement de contrepression (115) se termine par une dépouille de placage de bord (118).

9. Dispositif d'étanchéité à coussin de fluide suivant la revendication 1, **caractérisé en ce que** les moyens d'étanchéité d'anneau (110) sont constitués d'une lèvre d'étanchéité d'anneau (121) qui est solidaire de l'anneau continu perforé (105) d'une part, et qui établit un contact étanche avec l'intérieur ou le rebord de la gorge d'anneau (109) d'autre part.

10. Dispositif d'étanchéité à coussin de fluide suivant la revendication 1, **caractérisé en ce que** les moyens d'étanchéité d'anneau (110) sont constitués d'une portion axiale désépaissie (139) aménagée au voisinage de l'une au moins des extrémités axiales de l'anneau continu perforé (105), ladite portion (139) étant solidaire de la gorge d'anneau (109) de façon étanche, et étant suffisamment souple pour permettre au diamètre de l'anneau continu perforé (105) d'augmenter ou de diminuer par rapport à celui de ladite gorge (109).

11. Dispositif d'étanchéité à coussin de fluide suivant la revendication 1, **caractérisé en ce que** l'anneau continu perforé (105) est constitué d'un matériau souple et comprend au moins un ressort circonférentiel d'anneau (123) qui tend à réduire le diamètre dudit anneau (105) si la gorge d'anneau (106) est aménagée dans le piston (101) ou qui tend à augmenter le diamètre dudit anneau (105) si la gorge d'anneau (106) est aménagée dans le cylindre (102).

12. Dispositif d'étanchéité à coussin de fluide suivant la revendication 1, **caractérisé en ce que** la chambre de répartition de pression (119) héberge des moyens de diffusion de fluide d'anneau (124) qui forcent le fluide d'anneau (113) en provenance du circuit de transfert de pression (114) à lécher la plus grande surface possible de la face cylindrique interne d'anneau (106) dans le cas où la gorge d'anneau (106) est aménagée dans le piston (101) ou la plus la grande surface possible de la face cylindrique externe d'anneau (107) dans le cas où la gorge d'anneau (106) est aménagée dans le cylindre (102), avant de s'échapper via l'orifice calibré (111).

13. Dispositif d'étanchéité à coussin de fluide suivant la revendication 12, **caractérisée en ce que** les moyens de diffusion de fluide d'anneau (124) sont constitués d'une plaque de diffusion (136) logée au fond de la gorge d'anneau (106), l'une au moins des extrémités axiales de ladite plaque (136) étant munie d'au moins un orifice ou gorge latérale de plaque de diffusion (137) qui force le fluide d'anneau (113) provenant du circuit de transfert de pression (114) à déboucher dans la chambre de répartition de pression (119) par l'une au moins de ses extrémités axiales.

14. Dispositif d'étanchéité à coussin de fluide suivant la revendication 1, **caractérisé en ce que** la gorge d'anneau (109) présente une butée radiale d'anneau (127) qui limite la pénétration de l'anneau continu perforé (105) dans ladite gorge (109).

15. Dispositif d'étanchéité à coussin de fluide suivant la revendication 1, **caractérisé en ce que** si la gorge d'anneau (109) est aménagée dans le piston (101), le circuit de transfert de pression (114) est constitué d'un tube d'arrivée de pression (128) parallèle au cylindre (102) et solidaire du piston (101), une première extrémité dudit tube (128) débouchant à l'intérieur dudit piston (101) tandis que la deuxième extrémité dudit tube (128) débouche, via un alésage de chambre de pression (130) dans lequel il peut translater longitudinalement et de façon étanche, dans une chambre de pression (129) reliée à la source de fluide sous pression (112).

16. Dispositif d'étanchéité à coussin de fluide suivant la revendication 15, **caractérisé en ce que** le tube d'arrivée de pression (128) est relié à la chambre de répartition de pression (119) par au moins un conduit radial d'arrivée de pression (131).

17. Dispositif d'étanchéité à coussin de fluide suivant la revendication 15, **caractérisé en ce que** la chambre de pression (129) est reliée à la source de fluide sous pression (112) via un clapet anti-retour de pression proportionnelle qui permet au fluide d'anneau (113) d'aller de ladite source (112) à ladite chambre (129), mais non d'aller de ladite chambre (129) à ladite source (112).

18. Dispositif d'étanchéité à coussin de fluide suivant la revendication 1, **caractérisé en ce que** la gorge d'anneau (109) héberge un ressort d'expansion (133) qui prend appui sur ladite gorge (109) pour exercer un effort radial sur la face cylindrique interne d'anneau (106) dans le cas où la gorge d'anneau (106) est aménagée dans le piston (101) ou sur la face cylindrique externe d'anneau (107) dans le cas où la gorge d'anneau (106) est aménagée dans le cylindre (102).

19. Dispositif d'étanchéité à coussin de fluide suivant la revendication 18, **caractérisé en ce que** le ressort d'expansion (133) réalise par contact une étanchéité entre la gorge d'anneau (109) et l'anneau continu perforé (105).

20. Dispositif d'étanchéité à coussin de fluide suivant les revendications 12 et 18, **caractérisé en ce que** le ressort d'expansion (133) est muni d'au moins un orifice de diffusion de fluide (134) et/ou d'au moins une gorge de diffusion de fluide (135) de sorte à constituer avec ledit orifice (134) et/ou ladite gorge (135) les moyens de diffusion de fluide d'anneau (124).

## Patentansprüche

1. Abdichtungsvorrichtung mit Fluidkissen (100) für einen Kolben (101), der eine längsgerichtete Translationsbewegung in einem Zylinder (102) ausführen kann, welche der Achse des letzteren entspricht, wobei der Kolben (101) und der Zylinder (102), mit mindestens einem Verschlussstück (103) eine abzudichtende Kammer (104à begrenzen, **dadurch gekennzeichnet, dass** sie Folgendes umfasst:
• den Kolben (101) oder den Zylinder (102), wobei dieser mindestens eine Ringnut (109) umfasst;
• mindestens einen perforierten durchgehenden Ring (105), der eine zylindrische Ringinnenseite (106), eine zylindrische Ringaußenseite (107) und zwei axiale Ringflächen (108) aufweist, wobei der Ring (105) in der Ringnut (109) angeordnet ist, mit welcher der Kolben (101) oder der Zylinder (102) versehen ist, während der Ring (105) sich radial in der Ringnut (109) bewegen kann, ohne dass er diese verlassen kann, wobei der Ring (105) hinreichend nachgiebig ist, um es zu ermöglichen, dass sein Durchmesser unter Einwirkung eines Drucks einer unter Druck stehenden Fluidquelle (112) unter Bezugnahme auf denjenigen der Nut (109) zunimmt oder abnimmt;
• Ringabdichtungsmittel (110), welche die Dichtigkeit zwischen jeder der axialen Ringflächen (108) und der Ringnut (109) derart herstellen, dass letztere mit dem perforierten durchgehenden Ring (105) eine Druckverteilungskammer (119) begrenzt, die über einen Übertragungskreislauf (114) mit der unter Druck stehenden Fluidquelle (112) verbunden ist;
• mindestens eine Öffnung (111) von bestimmter Weite, welche den perforierten durchgehenden Ring (105) über dessen gesamte radiale Dicke durchsetzt;
• mindestens eine Tragfläche auf dem Fluidkissen (116), mit welchem der perforierte durchgehende Ring (105) versehen ist, wobei die Tragfläche entgegengesetzt zur Druckverteilungskammer (119) angeordnet ist.

2. Abdichtungsvorrichtung mit Fluidkissen gemäß Anspruch 1, **dadurch gekennzeichnet, dass** sie, falls der Kolben (101) mit der Ringnut (106) versehen ist, eine Gegendruckaussparung (115) umfasst, die keine Verbindung in axialer Richtung herstellt und einen Hohlraum auf der zylindrischen Ringaußenseite (107) bildet, sodass hinsichtlich der zylindrischen Ringaußenseite (107), welche mit der Aussparung (115) versehen ist, deren Fläche, welche nicht von der Gegendruckaussparung (115) eingenommen wird, die Tragfläche auf dem Fluidkissen (116) darstellt.

3. Abdichtungsvorrichtung mit Fluidkissen gemäß Anspruch 1, **dadurch gekennzeichnet, dass** sie, falls der Zylinder (102) mit der Ringnut (106) versehen ist, eine Gegendruckaussparung (115) umfasst, die keine Verbindung in axialer Richtung herstellt und einen Hohlraum auf der zylindrischen Ringinnenseite (106) bildet, sodass hinsichtlich der zylindrischen Ringinnenseite (106), welche mit der Aussparung (115) versehen ist, deren Fläche, welche nicht von der Gegendruckaussparung (115) eingenommen wird, die Tragfläche auf dem Fluidkissen (116) darstellt.

4. Abdichtungsvorrichtung mit Fluidkissen gemäß einem beliebigen der Ansprüche 1 bis 3, **dadurch gekennzeichnet, dass** die Gegendruckaussparung (115) aus einer Gegendrucknut (117) von geringer Tiefe besteht, die mehr oder weniger mittig auf die axiale Länge der zylindrischen Ringaußenseite (107) oder der zylindrischen Ringinnenseite (106) ausgerichtet ist, welche mit der Aussparung (115) versehen ist, wobei die Gegendrucknut (117) sich über gesamten Umfang der zylindrischen Ringaußenseite (107) oder der zylindrischen Ringinnenseite (106) erstreckt.

5. Abdichtungsvorrichtung mit Fluidkissen gemäß einem beliebigen der Ansprüche 1 bis 3, **dadurch gekennzeichnet, dass** sie eine Öffnung von bestimmter Weite (111) umfasst, die eine Verbindung zur Gegendruckaussparung (115) herstellt.

6. Abdichtungsvorrichtung mit Fluidkissen gemäß Anspruch 5, **dadurch gekennzeichnet, dass** die Öffnung von bestimmter Weite (111) die Verbindung zur Gegendruckaussparung (115) über eine Druckverteilungsaussparung (125) herstellt, welche einen Hohlraum am Grunde der Gegendruckaussparung (115) bildet.

7. Abdichtungsvorrichtung mit Fluidkissen gemäß Anspruch 6, **dadurch gekennzeichnet, dass** die Druckverteilungsaussparung (125) aus einer Druckverteilungsnut (126) besteht, die mehr oder weniger mittig auf die axiale Länge der zylindrischen Ringaußenseite (107) oder der zylindrischen Ringinnenseite (106) ausgerichtet ist, welche mit der Gegendruckaussparung (115) versehen ist, wobei die Druckverteilungsnut (126) sich über gesamten Umfang der zylindrischen Ringaußenseite (107) oder der zylindrischen Ringinnenseite (106) erstreckt.

8. Abdichtungsvorrichtung mit Fluidkissen gemäß Anspruch 1, **dadurch gekennzeichnet, dass** mindestens einer der beiden axialen Ränder der zylindrische Ringaußenseite (107) oder zylindrischen Ringinnenseite (106), welche mit der Gegendruckaussparung (115) versehen ist, in einer Gesenkschräge (118) zum Anfügen der Kante endet.

9. Abdichtungsvorrichtung mit Fluidkissen gemäß Anspruch 1, **dadurch gekennzeichnet, dass** die Ringabdichtungsmittel (110) aus einer Ringabdichtungslippe (121) bestehen, die einerseits fest mit dem perforierten durchgehenden Ring (105) verbunden ist und die andererseits einen abdichtenden Kontakt mit dem Inneren oder dem Rand der Ringnut (109) herstellt.

10. Abdichtungsvorrichtung mit Fluidkissen gemäß Anspruch 1, **dadurch gekennzeichnet, dass** die Ringabdichtungsmittel (110) aus einem verjüngten axialen Abschnitt (139) bestehen, welcher in der Nähe mindestens eines der axialen Enden des perforierten durchgehenden Rings (105) ausgebildet ist, wobei der Abschnitt (139) auf abdichtende Weise fest mit der Ringnut (109) verbunden ist und hinreichend nachgiebig ist, um es zu ermöglichen, dass der Durchmesser des perforierten durchgehenden Rings (105) unter Bezugnahme auf denjenigen der Nut (109) zunimmt oder abnimmt.

11. Abdichtungsvorrichtung mit Fluidkissen gemäß Anspruch 1, **dadurch gekennzeichnet, dass** der perforierte durchgehende Ring (105) aus einem nachgiebigen Material besteht und mindestens eine umlaufende Ringfeder (123) umfasst, welche darauf hinwirkt, dass sich der Durchmesser des Rings (105) verkleinert, wenn der Kolben (101) mit der Ringnut (106) versehen ist, oder welche darauf hinwirkt, dass sich der Durchmesser des Rings (105) vergrößert, wenn der Zylinder (102) mit der Ringnut (106) versehen ist.

12. Abdichtungsvorrichtung mit Fluidkissen gemäß Anspruch 1, **dadurch gekennzeichnet, dass** in der Druckverteilungskammer (119) Mittel (124) zur Ausbreitung von Ringfluid aufgenommen sind, welche bewirken, dass das Ringfluid (113), welches aus dem Druckübertragungskreislauf (114) stammt, zwangsläufig mit einer größtmöglichen Fläche der zylindrischen Ringinnenseite (106), wenn der Kolben (101) mit der Ringnut (106) versehen ist, oder mit einer größtmöglichen Fläche der zylindrischen Ringaußenseite (107) in Kontakt kommt, wenn der Zylinder (102) mit der Ringnut (106) versehen ist, bevor es über die Öffnung von bestimmter Weite (111) austritt.

13. Abdichtungsvorrichtung mit Fluidkissen gemäß Anspruch 12, **dadurch gekennzeichnet, dass** die Mittel (124) zur Ausbreitung von Ringfluid aus einer Ausbreitungsplatte (136) bestehen, die am Grunde der Ringnut (106) aufgenommen ist, wobei mindestens eines der axialen Enden der Platte (136) mit mindestens einer Öffnung oder seitlichen Nut (137) der Ausbreitungsplatte versehen ist, die bewirkt, dass das Ringfluid (113), welches aus dem Druckübertragungskreislauf (114) stammt, durch mindestens eines der axialen Enden der Druckverteilungskammer (119) in die letztere gelangt.

14. Abdichtungsvorrichtung mit Fluidkissen gemäß Anspruch 1, **dadurch gekennzeichnet, dass** die Ringnut (109) einen radialen Ringanschlag (127) aufweist, welcher das Eindringen des perforierten durchgehenden Rings (105) in die Nut (109) begrenzt.

15. Abdichtungsvorrichtung mit Fluidkissen gemäß Anspruch 1, **dadurch gekennzeichnet, dass** der Druckübertragungskreislauf (114), wenn der Kolben (101) mit der Ringnut (109) versehen ist, aus einem Druckzuführungsrohr (128) besteht, welches parallel zum Zylinder (102) und fest mit dem Kolben (101) verbunden ist, wobei ein erstes Ende des Rohrs (128) eine Verbindung mit dem Inneren des Kolbens (101) herstellt, wohingegen das zweite Ende des Rohrs (128) über eine Druckkammerbohrung (130), in welcher es auf abdichtende Weise eine längsgerichtete Translationsbewegung ausführen kann, eine Verbindung mit einer Druckkammer (129) herstellt, welche mit der Quelle des unter Druck stehenden Fluids (112) verbunden ist.

16. Abdichtungsvorrichtung mit Fluidkissen gemäß Anspruch 15, **dadurch gekennzeichnet, dass** das Druckzuführungsrohr (128) über mindestens eine radiale Druckzuführungsleitung (131) mit der Druckverteilungskammer (119) verbunden ist.

17. Abdichtungsvorrichtung mit Fluidkissen gemäß Anspruch 15, **dadurch gekennzeichnet, dass** die Druckkammer (129) über ein Proportionaldruck-Rückschlagventil, welches bewirkt, dass das Ringfluid (113) von der Quelle (112) zur Kammer (129) nicht jedoch von der Kammer (129) zur Quelle (112) gelangen kann, mit der Quelle des unter Druck stehenden Fluids (112) verbunden ist.

18. Abdichtungsvorrichtung mit Fluidkissen gemäß Anspruch 1, **dadurch gekennzeichnet, dass** die Ringnut (109) eine Ausdehnungsfeder (133) aufnimmt, die sich auf der Nut (109) abstützt, um eine radiale Kraft auf die zylindrische Ringinnenseite (106), wenn der Kolben (101) mit der Ringnut (106) versehen ist, oder auf die zylindrische Ringaußenseite (107) auszuüben, wenn der Zylinder (102) mit der Ringnut (106) versehen ist.

19. Abdichtungsvorrichtung mit Fluidkissen gemäß Anspruch 18, **dadurch gekennzeichnet, dass** die Ausdehnungsfeder (133) eine Abdichtung zwischen der Ringnut (109) und dem perforierten durchgehenden Ring (105) herstellt, indem sie den Kontakt herstellt.

20. Abdichtungsvorrichtung mit Fluidkissen gemäß den Ansprüchen 12 und 18, **dadurch gekennzeichnet, dass** die Ausdehnungsfeder (133) mit mindestens einer Fluidausbreitungsöffnung (134) und/oder mit mindestens einer Fluidausbreitungsnut (135) versehen ist, sodass sie mit der Öffnung (134) und/oder der Nut (135) die Mittel (124) zur Ausbreitung von Ringfluid bildet.

## Claims

1. Fluid-cushion sealing device (100) for a piston (101) capable of moving in longitudinal translation in a cylinder (102) and in the same axis as the latter, said piston (101) and said cylinder (102) defining, with at least one cylinder head (103), a chamber to be sealed (104) **characterized in that** it includes:
• Said piston (101) or
said cylinder (102), this one including at least one ring groove (109);
• at least one continuous perforated ring (105) which comprises an internal cylindrical ring surface (106), an external cylindrical ring surface (107) and two axial ring surfaces (108), said ring (105) being accommodated in said ring groove (109) provided in said piston (101) or in said cylinder (102), while said ring (105) is capable of moving radially in said ring groove (109) without being able to leave the latter, said ring (105) being sufficiently flexible to allow its diameter to increase or decrease relative to that of said groove (109) under pressure of a pressurized fluid source (112) ;
• ring sealing means (110) that produce a seal between each axial ring surface (108) and the ring groove (109), so that the latter defines, with the continuous perforated ring (105), a pressure distribution chamber (119) connected by a transfer circuit (114) to a pressurized fluid source (112);
• at least one calibrated opening (111) which passes right through the continuous perforated ring (105) in its radial thickness;
• at least one fluid-cushion carrying surface (116) which the continuous perforated ring (105) comprises, said carrying surface (116) being arranged on the opposite side from the pressure distribution chamber (119).

2. Fluid-cushion sealing device according to Claim 1, **characterized in that** it includes an axially blind counter-pressure recess (115) provided recessed on the external cylindrical ring surface (107) in the case in which the ring groove (106) is provided in the piston (101), so that the surface that is not occupied by the counter-pressure recess (115) of the external cylindrical ring surface (107) which receives said recess (115) constitutes the fluid-cushion carrying surface (116).

3. Fluid-cushion sealing device according to Claim 1, **characterized in that** it includes an axially blind counter-pressure recess (115) provided recessed on the internal cylindrical ring surface (106) in the case in which the ring groove is provided in the cylinder (102), so that the surface that is not occupied by the counter-pressure recess (115) of the internal cylindrical ring surface (106) which receives said recess (115) constitutes the fluid-cushion carrying surface (116).

4. Fluid-cushion sealing device according to any one of Claims 1 to 3, **characterized in that** the counter-pressure recess (115) consists of a counter-pressure groove (117) of small depth more or less centered on the axial length of the external cylindrical ring surface (107) or of the internal cylindrical ring surface (106) which receives said recess (115), said counter-pressure groove (117) being produced over the entire circumference of said external cylindrical ring surface (107) or of said internal cylindrical ring surface (106).

5. Fluid-cushion sealing device according to Claims 1 to 3, **characterized in that** it includes a calibrated opening (111) which opens into the counter-pressure recess (115).

6. Fluid-cushion sealing device according to Claim 5, **characterized in that** the calibrated opening (111) opens into the counter-pressure recess (115) via a pressure distribution recess (125) provided recessed at the bottom of said counter-pressure recess (115).

7. Fluid-cushion sealing device according to Claim 6, **characterized in that** the pressure distribution recess (125) consists of a pressure distribution groove (126) which is more or less centered on the axial length of the external cylindrical ring surface (107) or of the internal cylindrical ring surface (106) which receives the counter-pressure recess (115), said pressure distribution groove (126) being produced over the entire circumference of said external cylindrical ring surface (107) or of said internal cylindrical ring surface (106).

8. Fluid-cushion sealing device according to Claim 1, **characterized in that** at least one of the two axial edges of the external cylindrical ring surface (107) or of the internal cylindrical ring surface (106) which receives the counter-pressure recess (115) ends in an edge plating clearance (118).

9. Fluid-cushion sealing device according to Claim 1, **characterized in that** the ring sealing means (110) consist of a ring sealing lip (121) which is secured to the continuous perforated ring (105), on the one hand, and which establishes a sealed contact with the interior or the rim of the ring groove (109), on the other hand.

10. Fluid-cushion sealing device according to Claim 1, **characterized in that** the ring sealing means (110) consist of a thinned axial portion (139) provided in the vicinity of at least one of the axial ends of the continuous perforated ring (105), said portion (139) being sealingly secured to the ring groove (109) and sufficiently flexible to allow the diameter of the continuous perforated ring (105) to increase or decrease relative to said groove (109).

11. Fluid-cushion sealing device according to Claim 1, **characterized in that** the continuous perforated ring (105) consists of a flexible material and includes at least one circumferential ring spring (123) which tends to reduce the diameter of said ring (105) if the ring groove (106) is provided in the piston (101) or which tends to increase the diameter of said ring (105) if the ring groove (106) is provided in the cylinder (102).

12. Fluid-cushion sealing device according to Claim 1, **characterized in that** the pressure distribution chamber (119) accommodates ring fluid dispersion means (124) which force the ring fluid (113) originating from the pressure transfer circuit (114) to sweep the largest possible area of the internal cylindrical ring surface (106) in the case in which the ring groove (106) is provided in the piston (101) or the largest possible area of the external cylindrical ring surface (107) in the case in which the ring groove (106) is provided in the cylinder (102), before escaping through the calibrated opening (111).

13. Fluid-cushion sealing device according to Claim 12, **characterized in that** the ring fluid dispersion means (124) consist of a dispersion plate (136) accommodated at the bottom of the ring groove (106), at least one of the axial ends of said plate (136) being provided with at least one lateral dispersion plate opening or groove (137) which forces the ring fluid (113) originating from the pressure transfer circuit (114) to lead into the pressure distribution chamber (119) through at least one of its axial ends.

14. Fluid-cushion sealing device according to Claim 1, **characterized in that** the ring groove (109) has a radial ring abutment (127) which limits the penetration of the continuous perforated ring (105) into said groove (109).

15. Fluid-cushion sealing device according to Claim 1, **characterized in that**, if the ring groove (109) is provided in the piston (101), the pressure transfer circuit (114) consists of a pressure intake tube (128) parallel to the cylinder (102) and secured to the piston (101), a first end of said tube (128) leading into the interior of said piston (101), while the second end of said tube (128) opens, via a pressure chamber borehole (130) in which it can move by translation longitudinally and sealingly, into a pressure chamber (129) connected to the pressurized fluid source (112)

16. Fluid-cushion sealing device according to Claim 15, **characterized in that** the pressure intake tube (128) is connected to the pressure distribution chamber (119) by at least one radial pressure intake duct (131).

17. Fluid-cushion sealing device according to Claim 15, **characterized in that** the pressure chamber (129) is connected to the pressurized fluid source (112) by a proportional pressure non-return valve which allows the ring fluid (113) to go from said source (112) to said chamber (129), but not from said chamber (129) to said source (112).

18. Fluid-cushion sealing device according to Claim 1, **characterized in that** the ring groove (109) accommodates an expanding spring (133) which bears against said groove (109) in order to exert a radial force on the internal cylindrical ring surface (106) in the case in which the ring groove (106) is provided in the piston (101) or on the external cylindrical ring surface (107) in the case in which the ring groove (106) is provided in the cylinder (102).

19. Fluid-cushion sealing device according to Claim 18, **characterized in that** the expanding spring (133) produces by contact a seal between the ring groove (109) and the continuous perforated ring (105).

20. Fluid-cushion sealing device according to Claims 12 and 18, **characterized in that** the expanding spring (133) is provided with at least one fluid dispersion opening (134) and/or with at least one fluid dispersion groove (135) so as to constitute, with said opening (134) and/or said groove (135), the ring fluid dispersion means (124).
